# EUROPEAN PATENT SPECIFICATION

(11) **EP 1 892 879 B1**
(45) Date of publication and mention of the grant of the patent: **27.07.2011**
(21) Application number: 06119594.7
(22) Date of filing: 25.08.2006
(51) Int. Cl.: H04W 60/00

(54) **System and method for transferring a device between mobile carriers**
System und Verfahren zur Übertragung von einem Endgerät zwischen mobilen Trägern
Système et procédé pour le transfert d'un dispositif entre des porteurs mobiles

(43) Date of publication of application: 27.02.2008
(73) Proprietor: RESEARCH IN MOTION LIMITED, Waterloo, Ontario N2L 3W8 (CA)
(72) Inventor: Madej, Piotr c/o Research in Motion Limited, Waterloo Ontario N2L 3W8 (CA); Chin, Jia-Lin c/o Research in Motion Limited, Waterloo Ontario N2L 3W8 (CA); Vitorino, Diana G. c/o Research in Motion Limited, Waterloo Ontario N2L 3W8 (CA); Janosi, Levente c/o Research in Motion Limited, Waterloo Ontario N2L 3W8 (CA)
(74) Representative: MERH-IP Matias Erny Reichl Hoffmann

(56) References cited:
- WO-A-97/38522
- WO-A-98/46002
- WO-A-03/092317
- WO-A-2006/034284
- US-A1- 2004 139 204
- US-B1- 6 381 456

## Description

The present invention relates generally to systems and methods for transferring a device between mobile carriers.

Suppliers of mobile communication services, such as wireless email, may offer handheld devices that may be used on the networks of multiple mobile carriers. Where there are two mobile carriers A and B with compatible network standards and protocols, the handheld device may be capable of operating on the wireless networks of both mobile carriers A and B. If mobile carrier A and mobile carrier B are related companies, they may allow the handheld devices to be transferred between their networks.

Suppose that a user purchases and registers a handheld device and becomes a subscriber on mobile carrier A's wireless network. In some cases, a handheld device may be returned and made available to another user who may become a subscriber on mobile carrier B's wireless network. This may result in the supplier billing both mobile carriers A and B for the same device. What is needed is an improved system and method for transferring devices between mobile carriers that may avoid this problem.

US6381456 discloses a method for managing subscriber location information in a mobile communications system, where a mobile subscriber may move from a home location register (HLR) to one of a plurality of visitor location registers (VLRs), and back again.

WO98/46002 discloses a telecommunications system in which the use of three separate registers within the system allows several terminals to be associated with one user, several users to be associated with one terminal, several subscriptions to be associated with one user, and several users to be selectively associated with one subscription. Subscription records include a list of allowed users for each subscription account.

In a main aspect, the invention provides a method of transferring a handheld device between mobile carriers detecting the handheld device, comprising: receiving at a supplier provisioning system, from a requesting mobile carrier, a request to register the device on the requesting mobile carrier's wireless network; uniquely identifying the device and querying a database accessible to the supplier provisioning system to determine if the device has been previously registered to a previous mobile carrier using a device based unique billing identification `BID'; determining if the device has been previously registered to a previous mobile carrier with a device based unique BID, and if so deactivating the device from the previous mobile carrier's wireless network; and upon confirmation that the device has been deactivated from the previous mobile carrier's wireless network, registering the device on the requesting mobile carrier's wireless network with the device based unique BID.

### BRIEF DESCRIPTION OF THE DRAWINGS

In the figures which illustrate exemplary embodiments of the invention:
FIG. 1 is an illustration of a device in accordance with an embodiment;
FIG. 2 is a schematic block diagram of a communication subsystem component in the device of FIG. 1;
FIG. 3 is a schematic block diagram of a system in accordance with an embodiment;
FIG. 4 is a flowchart of a method in accordance with an embodiment.

### DESCRIPTION OF PREFERRED EMBODIMENTS

As noted above, the present invention relates generally to a system and method for transferring devices between mobile carriers.

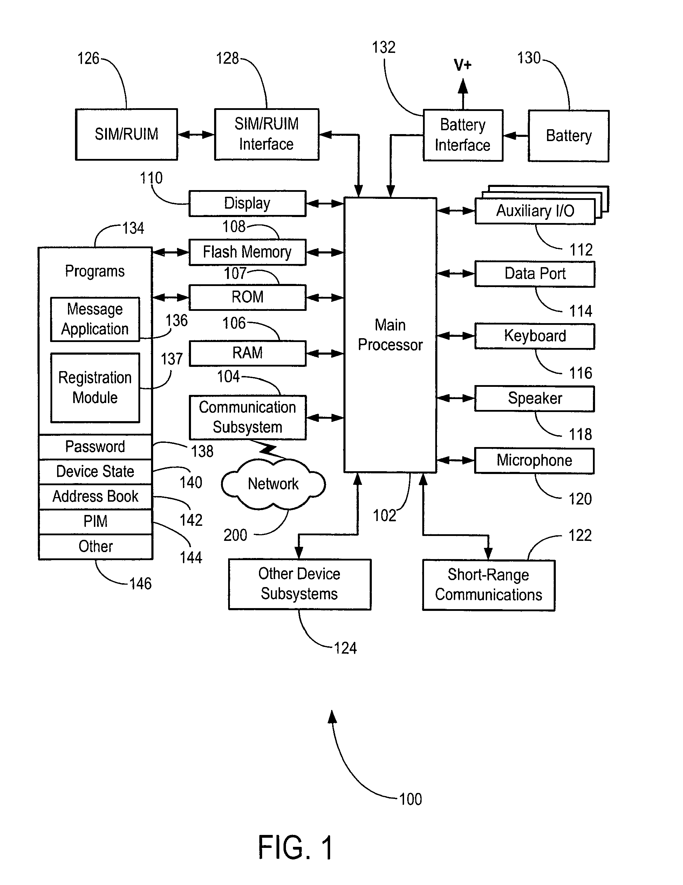

Shown in FIG. 1 is a schematic block diagram of an illustrative mobile handheld device 100. The handheld device 100 may comprise a number of components, including a main processor 102 which controls the overall operation of device 100. Communication functions, including data and voice communications, may be performed through a communication subsystem 104. The communication subsystem 104 may receive messages from and sends messages to a wireless network 200.

The main processor 102 may also interact with additional subsystems such as a random access memory (RAM) 106, a flash memory 108, a display 110, an auxiliary input/output (I/O) subsystem 112, a data port 114, a keyboard 116, a speaker 118, a microphone 120, short-range communications 122 and other device subsystems 124. The device 100 may be a battery-powered device and may include a battery interface 132 for receiving one or more rechargeable batteries 130 and for powering the various subsystems described above.

Operating system software used by the main processor 102 is typically stored in a persistent store such as flash memory 108. Those skilled in the art will appreciate that the operating system, specific device applications, or parts thereof, may be temporarily loaded into a volatile store such as the RAM 106.

Handheld device 100 may also include a read-only memory (ROM) 107 that may store a non-alterable electronic serial number or ESN which may be burned into ROM 107 at the time of manufacture of device 100. In addition, handheld device 100 may have a unique product identification number (PIN) stored in the ROM 107, or in another memory store in device 100.

The main processor 102, in addition to its operating system functions, enables execution of software applications 134 on the device 100. The subset of software applications 134 that control basic device operations, including data and voice communication applications, will normally be installed on the device 100 during its manufacture.

The software applications 134 may include, for example, a messaging application 136, and a password approval module 138. The software applications 134 may also include a device registration module 137 for registering the device 100 on a carrier network. As will be described further below, the registration of device 100 may be performed such that the double-billing problem as described above may be avoided.

The handheld device 100 may further include a device state module 140, an address book 142, a personal information manager (PIM) 144, and various other modules 146. Additional applications may also be loaded onto the device 100 through one of the wireless network 200, the auxiliary I/O subsystem 112, the data port 114, the short-range communications subsystem 122, or another subsystem 124.

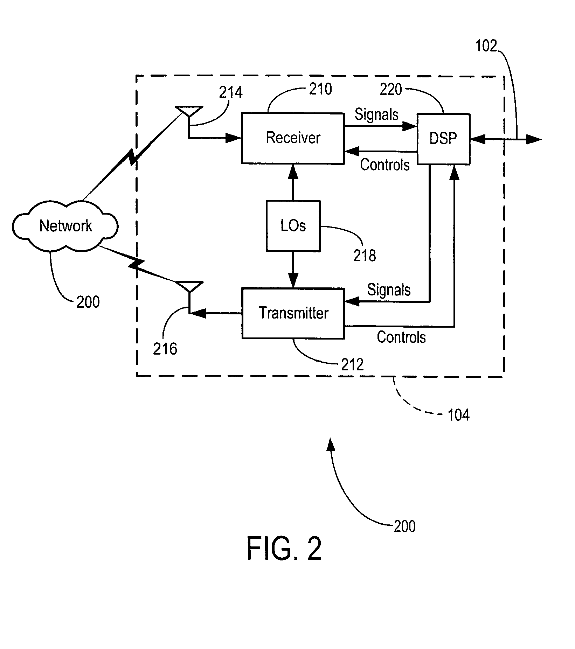

Referring now to FIG. 2, a block diagram of the communication subsystem component 104 of FIG. 1 is shown. The communication subsystem 104 may comprise a receiver 210 and a transmitter 212, as well as associated components such as one or more embedded or internal antenna elements 214, 216, Local Oscillators (LOs) 218, and a processing module such as a Digital Signal Processor (DSP) 220.

Signals received by the antenna 214 through the wireless network 200 are input to the receiver 210, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 220. In a similar manner, signals to be transmitted are processed, including modulation and encoding, by the DSP 220. These DSP-processed signals are input to the transmitter 212 for digital-to-analog (D/A) conversion, frequency up conversion, filtering, amplification and transmission over the wireless network 200 via the antenna 216.

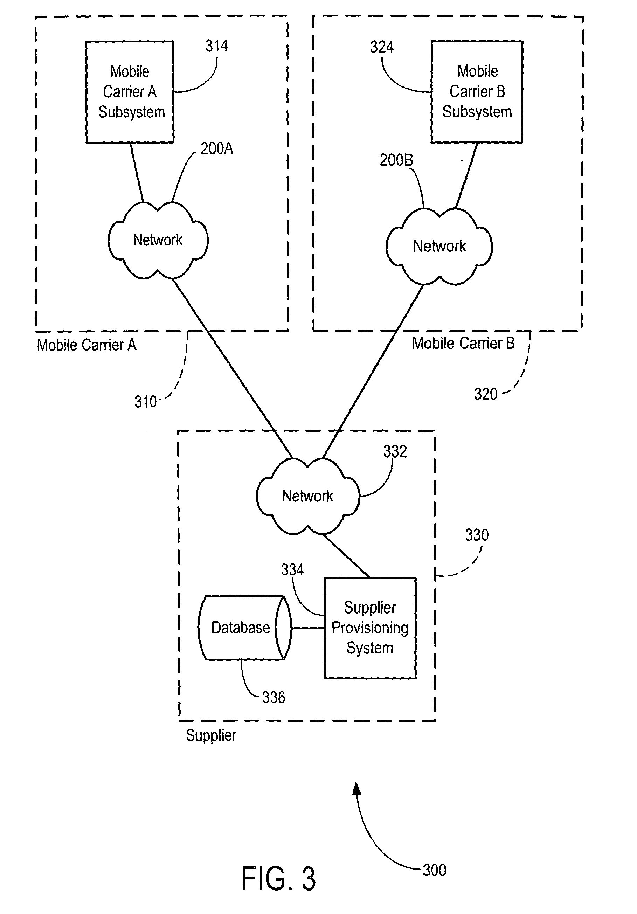

Now referring to FIG. 3, shown is an illustrative schematic block diagram of wireless networks 200A, 200B of mobile carrier A 310 and mobile carrier B 320, respectively. With the various components and subsystems described above, device 100 may be configured to access wireless networks 200A and 200B. As shown, each of the wireless networks 200A, 200B may have subsystems 314, 324 for requesting registration of devices 100 onto their respective wireless networks 310, 320.

Still referring to FIG. 3, a supplier 330 of wireless communication services may offer, for example, wireless email services to subscribers on both wireless networks 200A, 200B via network connections to the supplier 330's own network 332. The supplier 330's network 332 may connect to a provisioning system 334 maintained by the supplier 330 and which may be appropriately configured to interact with subsystems 314, 324 provided on each of the wireless networks 200A, 200B. Provisioning system 334 may maintain a database 336 of devices 100 that have been provisioned on the wireless networks 200A, 200B of mobile carrier A 310, and mobile carrier B 320.

In the database 336 of provisioning system 334, each of the devices 100 may be uniquely identified, for example, by the unique ESN burned into the ROM 107 of each device 100. Alternatively, each device 100 may be uniquely identified by the unique PIN identifier stored in ROM 107, or in another memory store in device 100. Records in database 336 may contain the unique ESN or PIN retrieved from ROM 107 or another memory store on each device 100. Each device 100 may thus be uniquely recognized by the supplier's provisioning system 334. Records in database 336 may also store information for the owning mobile carrier (e.g. mobile carrier A 310, or mobile carrier B 320), and this information may be linked to the unique ESN or PIN of device 100.

In an embodiment, each of the devices 100 may also have a unique billing identification (BID) based on the ESN or PIN. This information may also be stored in the database 336 of provisioning system 334. The database 336 of provisioning system 334 may also store for each device 100 information on various wireless communication services that have been provisioned for that device (e.g. voice, data, picture, text messaging, Internet access, music downloading, etc.). Use of the various services can be monitored by a subscriber's unique BID, and billed appropriately to the subscriber.

In an embodiment, registration module 137 of device 100 may be configured such that, when the device 100 is first powered up by a new user, the device 100 seeks a wireless network connection to access the supplier's provisioning system 334.
Subsystems 314, 324 on the wireless networks 200A, 200B may facilitate this connection between device 100 and provisioning system 334.

In the scenario described earlier, where a device 100 is originally registered to carrier A 310's wireless network 200A, then is transferred to carrier B 320's wireless network 320, a double-billing problem may occur if device 100 is still activated on mobile carrier A 310's wireless network 200A. Even if carrier A 310 subsequently detects that device 100 has been registered on carrier B 320's wireless network 200B, carrier A 310 may be prevented by regulatory and security restrictions from attempting to deactivate device 100, as the device is now being used by carrier B 320's subscriber. In order to avoid this above problem, the following is proposed.

In an embodiment, the request to provision the device 100 is received by provisioning system 334 (via subsystems 314, 324) only when the device 100 is turned on and at least temporarily makes a connection to the wireless network of the requesting mobile carrier. This is so that the ESN or PIN of the device 100 from which the request is made may be retrieved.

In the current example, suppose the request to provision the services is received from mobile carrier B 320. Rather than fulfilling the request to provision services for device 100 immediately, provisioning system 334 may be configured to first query its database 336 to determine whether the device 100 has been previously registered. As noted above, the unique ESN or PIN stored in ROM 107, or in another memory store in device 100, may be used to uniquely identify the device 100 for the purposes of this query.

In an embodiment, in order to maintain security, mobile carrier B 320 is prevented from conducting a status request on device 100 directly from mobile carrier A 310, and vice versa. Rather, the supplier 330 handles any transfer of the device 100 between mobile carrier A 310 and mobile carrier B 320 on their behalf.

In the current example, upon receiving the registration request from mobile carrier B, provisioning system 334 may determine if there is a record of device 100 in its provisioning system 334. As noted, the ESN or PIN may be used to uniquely identify device 100. If device 100 has not been previously registered, then provisioning system 334 may proceed to allow registration of device 100 on mobile carrier B 320's wireless network 200B, and provision mobile communication services for the device 100.

On the other hand, if provisioning system 334 determines that device 100 has been previously registered (e.g. there is a record in database 336 of device 100 being registered on wireless network 200A of mobile carrier A 310), provisioning system 334 may be configured to determine whether the previous mobile carrier (i.e. mobile carrier A 310) uses a device based BID (e.g. BID based on ESN or PIN) and the device 100 is still activated on wireless network 200A. If the provisioning system 100 determines that device 100 is still activated on the wireless network 200A of mobile carrier A 310, then provisioning system 334 may proceed to deactivate device 100 on wireless network 200A. A notice may be sent to mobile carrier A 310 to advise that device 100 has been deactivate on its network. If there are any billing contracts set up for device 100 on wireless network 200A, such billing contracts may also be cancelled by the provisioning system 334.

In an embodiment, in order to allow the supplier 330 to verify deactivation of device 100 before allowing registration, mobile carrier B 320 will not be able to pre-activate a service for the device 100. On the other hand, if mobile carrier B 320 uses a non-device specific billing ID (e.g. Mobile Station International Subscriber Directory Number also known as MSISDN), then mobile carrier B 320 may pre-activate a subscriber with some services but still will not be able to register a device 100 that is currently active for A until that device 100 completes registration with mobile carrier B 320.

Upon confirming deactivation of device 100 on wireless network 200A, provisioning system 334 may proceed to register device 100 on wireless network 200B, and also provision the requested wireless communication services. A new billing contract based on a new BID may also be set up for device 100 on wireless network 200B.

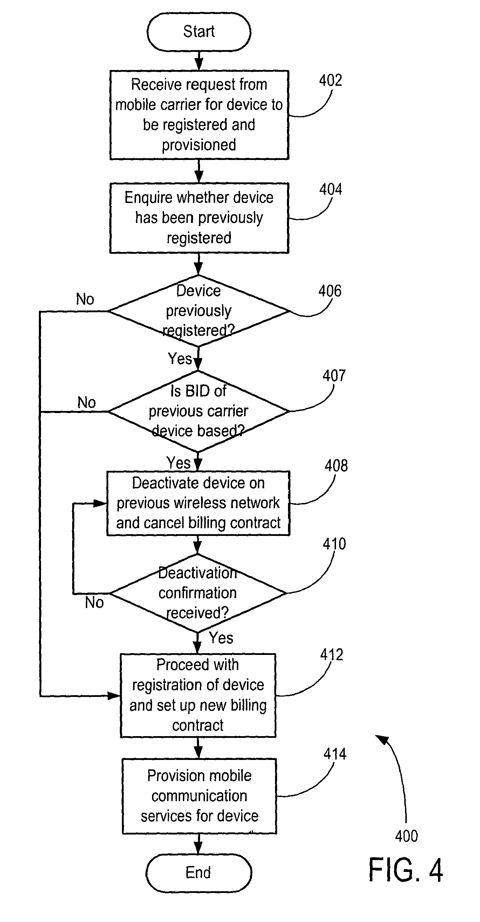

Now referring to FIG. 4, shown is an illustrative method 400 corresponding to the above described system. Method 400 begins and, at block 402, receives a request (e.g. from mobile carrier B 320) for a device (e.g. handheld device 100) to be registered (e.g. on mobile carrier B 320's wireless network 200B) and provisioned with mobile communications services. Upon receiving this request, at block 404, method 400 may proceed to make an enquiry (e.g. to provisioning system 334 and its database 336) to see whether device 100 has been previously registered and provisioned.

At decision block 406, method 400 determines if the device 100 may have been previously registered. If no, method 400 proceeds to block 412 where method 400 proceeds with registration of device 100. Method 400 then proceeds to block 414 where method 400 provisions the requested wireless communication services on the wireless network (i.e. wireless network 200B) of the requesting mobile carrier B 320. If yes, module 400 proceeds to block 407.

At block 407, method 400 determines if the BID of the previous mobile carrier (i.e. mobile carrier A 310) is device based (e.g. based on the unique ESN or unique PIN of the device 100). If no, method 400 proceeds to block 412 and proceeds with registration of device 100. If yes, method 400 proceeds to block 408.

At block 408, method 400 deactivates the device 100 on the wireless network of the previous mobile carrier (i.e. mobile carrier A 310). Any billing contract for device 100 with the previous wireless carrier may also be cancelled.

At decision block 410, method 400 determines if deactivation of the device on the previous mobile carrier has been confirmed. If no, method 400 loops. If yes, method 400 proceeds to block 412 where method 400 proceeds to allow registration of device 100. A new billing contract may also be set up for device 100 on the wireless network of the requesting mobile carrier (i.e. wireless network 200B of mobile carrier B 320).

Method 400 then proceeds to block 414, where method 400 may provision mobile communication services for the device on the requesting mobile carrier's wireless network (i.e. wireless network 200B). Method 400 then ends.

As will be appreciated, with the above system and method, the double-billing problem between mobile carriers A and B may be avoided.

Thus, in accordance with an embodiment of the invention, there is provided a method of transferring a handheld device between mobile carriers, comprising: receiving from a requesting mobile carrier a request to register the device on the requesting mobile carrier's wireless network; uniquely identifying the device and querying a database to determine if the device has been previously registered; if the device has been previously registered to a previous mobile carrier, deactivating the device from the previous mobile carrier's wireless network; and upon confirmation that the device has been deactivated from the previous mobile carrier's wireless network, registering the device on the requesting mobile carrier's wireless network.

In an embodiment, the method further comprises, upon registration of the device on the requesting mobile carrier's wireless network, provisioning requested mobile communication services for the device on the requesting mobile carrier's wireless network.

In another embodiment, the method further comprises uniquely identifying the device by one of a unique electronic serial number (ESN) and a unique product identification number (PIN).

In another embodiment, the method further comprises maintaining in the database a list of previously registered devices based on one of the unique ESN and the unique PIN.

In another embodiment, the method further comprises maintaining in the database a unique billing identification (BID) based on one of the unique ESN and the unique PIN.

In another embodiment, the method further comprises receiving the request to register the device only if the device is currently connected via the requesting mobile carrier's wireless network and can be identified by one of the unique ESN and the unique PIN.

In another embodiment, the method further comprises, upon registration of the device on the requesting mobile carrier's wireless network, updating the database with the new registration information for the device.

In another embodiment, the method further comprises deactivating the device from the previous mobile carrier's wireless network only if the previous mobile carrier uses a device based billing identification (BID).

In another aspect of the invention, there is provided a system for transferring a handheld device between mobile carriers, comprising: a provisioning system for receiving from a requesting mobile carrier a request to register the device on the requesting mobile carrier's wireless network; a database uniquely identifying the device to determine if the device has been previously registered; deactivation means for deactivating the device from the previous mobile carrier's wireless network if the device has been previously registered to a previous mobile carrier; and registration means for registering the device on the requesting mobile carrier's wireless network upon confirmation that the device has been deactivated from the previous mobile carrier's wireless network.

In an embodiment, the system further comprises provisioning means for provisioning requested mobile communication services for the device on the requesting mobile carrier's wireless network upon registration of the device on the requesting mobile carrier's wireless network.

In another embodiment, the system further comprises identification means for uniquely identifying the device by one of a unique electronic serial number (ESN) and a unique product identification number (PIN).

In another embodiment, the provisioning system maintains in the database a list of previously registered devices based on one of the unique ESN and the unique PIN.

In another embodiment, the provisioning system maintains in the database a unique billing identification (BID) based on one of the unique ESN and the unique PIN.

In another embodiment, the provisioning system is configured to receive the request to register the device only if the device is currently connected via the requesting mobile carrier's wireless network and can be identified by one of the unique ESN and the unique PIN.

In another embodiment, the database stores the new registration information for the device upon registration of the device on the requesting mobile carrier's wireless network.

In another aspect of the invention, there is provided a computer readable medium storing computer code that when loaded into a provisioning system adapts the provisioning system to transfer a handheld device between mobile carriers, the computer readable medium comprising: code for receiving from a requesting mobile carrier a request to register the device on the requesting mobile carrier's wireless network; code for uniquely identifying the device and querying a database to determine if the device has been previously registered; code for deactivating the device from the previous mobile carrier's wireless network if the device has been previously registered to a previous mobile carrier; and code for registering the device on the requesting mobile carrier's wireless network upon confirmation that the device has been deactivated from the previous mobile carrier's wireless network.

In an embodiment, the computer readable medium further comprises code for provisioning requested mobile communication services for the device on the requesting mobile carrier's wireless network upon registration of the device on the requesting mobile carrier's wireless network.

In another embodiment, the computer readable medium further comprises code for uniquely identifying the device by one of a unique electronic serial number (ESN) and a unique product identification number (PIN).

In another embodiment, the computer readable medium further comprises code for maintaining in the database a list of previously registered devices based on one of the unique ESN and the unique PIN.

In another embodiment, the computer readable medium further comprises code for maintaining in the database a unique billing identification (BID) based on one of the unique ESN and the unique PIN.

In another embodiment, the computer readable medium further comprises code for receiving the request to register the device only if the device is currently connected via the requesting mobile carrier's wireless network and can be identified by one of the unique ESN and the unique PIN.

In another embodiment, the computer readable medium further comprises code for updating the database with the new registration information for the device upon registration of the device on the requesting mobile carrier's wireless network.

In another embodiment, the computer readable medium further comprises code for deactivating the device from the previous mobile carrier's wireless network only if the previous mobile carrier uses a device based billing identification (BID).

While illustrative embodiments have been described above, it will be appreciated that various changes and modifications may be made. More generally, the scope of the invention is defined by the following claims.

## Claims

1. A method of transferring a handheld device (100) between mobile carriers (310, 320) detecting the handheld device (100), comprising:
receiving at a supplier provisioning system (334), from a requesting mobile carrier (310, 320), a request to register the device (100) on the requesting mobile carrier's wireless network (200A, 200B);
uniquely identifying the device (100) and querying a database (336) accessible to the supplier provisioning system (334) to determine if the device (100) has been previously registered to a previous mobile carrier using a device based unique billing identification 'BID';
determining if the device (100) has been previously registered to a previous mobile carrier with a device based unique BID, and if so deactivating the device (100) from the previous mobile carrier's wireless network; and
upon confirmation that the device (100) has been deactivated from the previous mobile carrier's wireless network, registering the device on the requesting mobile carrier's wireless network (200A, 200B) with the device based unique BID.

2. The method of claim 1, further comprising, upon registration of the device (100) on the requesting mobile carrier's wireless network (200A, 200B), provisioning requested mobile communication services for the device (100) on the requesting mobile carrier's wireless network (200A, 200B).

3. The method of claim 1 or claim 2, further comprising using as the device based unique BID a unique electronic serial number 'ESN' or a unique product identification number `PIN'.

4. The method of claim 3, further comprising maintaining in the database (336) a list of previously registered devices (100) based on the device based unique BID.

5. The method of claim 3 or claim 4, further comprising receiving the request to register the device (100) only if the device is connected wirelessly via the requesting mobile carrier's wireless network (200A, 200B) and can be identified by the device based unique BID.

6. The method of any one of claims 1 to 5, further comprising, upon registration of the device (100) on the requesting mobile carrier's wireless network (200A, 200B), updating the database (336) with the new registration information for the device.

7. A system (300) for transferring a handheld device (100) between mobile carriers (310, 320) detecting the handheld device (100), comprising:
a supplier provisioning system (334) for receiving from a requesting mobile carrier (310, 320) a request to register the device on the requesting mobile carrier's wireless network (200A, 200B);
a database (336) accessible to the supplier (330) for determining if the device (100) has been previously registered to a previous mobile carrier using a device based unique billing identification `BID';
deactivation means (334) for deactivating the device (100) from the previous mobile carrier's wireless network if the supplier provisioning system (334) determines that the device has been previously registered to a previous mobile carrier using a device based unique BID; and
registration means (334) for registering the device (100) on the requesting mobile carrier's wireless network using the device based unique BID upon confirmation that the device has been deactivated from the previous mobile carrier's wireless network.

8. The system (300) of claim 7, further comprising provisioning means (334) for provisioning requested mobile communication services for the device (100) on the requesting mobile carrier's wireless network (200A, 200B) upon registration of the device on the requesting mobile carrier's wireless network.

9. The system (300) of claim 7 or claim 8, further comprising identification means for uniquely identifying the device by the device based unique BID comprising a unique electronic serial number `ESN' or a unique product identification number 'PIN'.

10. The system (300) of claim 9, wherein the provisioning system (334) is arranged to maintain in the database (336) a list of previously registered devices (100) based on the unique ESN or the unique PIN.

11. The system (300) of claim 9 or claim 10, wherein the provisioning system (334) is configured to receive the request to register the device (100) only if the device is connected wirelessly via the requesting mobile carrier's wireless network (200A, 200B) and can be identified by the unique ESN or the unique PIN.

12. The system (300) of any one of claims 7 to 11, wherein the database (336) is arranged to store the new registration information for the device (100) upon registration of the device on the requesting mobile carrier's wireless network.

13. A computer readable medium storing computer code that when loaded into a provisioning system (334) adapts the provisioning system to perform the method of any one of claims 1 to 6

14. A communication network comprising two mobile carriers (310, 320), a handheld device (100) and the system (300) of any one of claims 7 to 12 for transferring the handheld device between the mobile carriers.

## Patentansprüche

1. Verfahren zum Übergeben einer handgehaltenen Vorrichtung (100) zweischen mobilen Carriern (310, 320), die die handgehaltene Vorrichtung (100) erfassen, das aufweist:
Empfangen, an einem Anbieter-Bereitstellungssystem (334), von einem anfordernden mobilen Carrier (310, 320) einer Anforderung zum Registrieren der Vorrichtung (100) an dem drahtlosen Netzwerk (200A, 200B) des anfordernden mobilen Carriers;
eindeutiges Identifizieren der Vorrichtung (100) und Abfragen einer Datenbank (336), die für das Anbieter-Bereitstellungssystem (334) zugänglich ist,
um zu bestimmen, ob die Vorrichtung (100) vorher mit einem vorherigen mobilen Carrier registriert war, unter Verwendung einer Vorrichtungs-basierten eindeutigen Abrechnungsidentifikation BID (billing identification);
Bestimmen, ob die Vorrichtung (100) vorher mit einem vorherigen mobilen Carrier registriert war, mit einer Vorrichtungs-basierten eindeutigen BID, und wenn ja, dann Desaktivieren der Vorrichtung (100) von dem drahtlosen Netzwerk des vorherigen mobilen Carriers; und
bei einer Bestätigung, dass die Vorrichtung (100) von dem drahtlosen Netzwerk des vorherigen mobilen Carriers deaktiviert wurde, Registrieren der Vorrichtung an dem drahtlosen Netzwerk (200A, 2008) des anfordernden mobilen Carriers mit der Vorrichtungs-basierten eindeutigen BID.

2. Verfahren gemäß Anspruch 1, das weiter aufweist, bei Registrierung der Vorrichtung (100) an dem drahtlosen Netzwerk (200A, 200B) des anfordernden mobilen Carriers, Bereitstellen von angeforderten mobilen Kornmunikationsdiensten für die Vorrichtung (100) an dem drahtlosen Netzwerk (200A, 200B) des anfordernden mobilen Carriers.

3. Verfahren gemäß Anspruch 1 oder Anspruch 2, das weiter aufweist ein Verwenden, als die Vorrichtungs-basierte eindeutige BID, einer eindeutigen elektronischen Seriennummer ESN (electronic serial number) oder einer eindeutigen Produktidentifikationsnummer PIN (product identification number).

4. Verfahren gemäß Anspruch 3, das weiter aufweist ein Führen einer Liste von vorher registrierten Vorrichtungen (100) in der Datenbank (336) basierend auf der Vorrichtungs-basierten eindeutigen BID.

5. Verfahren gemäß Anspruch 3 oder Anspruch 4, das weiter aufweist ein Empfangen der Anforderung zum Registrieren der Vorrichtung (100) nur, wenn die Vorrichtung über das drahtlose Netzwerk (200A, 2008) des anfordernden mobilen Carriers drahtios verbunden ist und durch die Vorrichtungs-basierte eindeutige BID identiffiziert werden kann.

6. Verfahren gemäß einem der Ansprüche 1 bis 5, das weiter aufweist, bei Registrierung der Vorrichtung (100) an dem drahtlosen Netzwerk (200A, 2008) des anfordernden mobilen Carriers, ein Aktualisleren der Datenbank (336) mit der neuen Registrierungsinformation für die Vorrichtung.

7. System (300) zum Übergeben einer handgetlaitenen Vorrichtung (100) zwischen mobilen Carriern (310, 320), die die handgehaltene Vorrichtung (100) erfassen, das aufweist
ein Anbjeter-Bereitstellungssystem (334) zum Empfangen von einem anfordernden mobilen Carrier (310, 320) einer Anforderung zum Registrieren der Vorrichtung an dem drahtlosen Netzwerk (200A, 200B) des anfordernden mobilen Carriers;
eine Datenbank (336), die der Anbieter (330) zugänglich ist, zum Bestimmen, ob die Vorrichtung (100) vorher mit einem vorbeugen mobilen Carrier registriert war, unter Verwendung einer Vorrichtungs-basierten eindeutigen Abrechnungsidentifikation BID (billing identification); Deaktivierungsmittel (334) zum Deaktivieren der Vorrichtung (100) von dem drahtlosen Netzwerk des vorherigen mobilen Carriers, wenn das Anbieter-Bereitstellungssystem (334) bestimmt, dass die Vorrichtung vorher mit einem vorherigen mobilen Carrier registriert war, unter Verwendung einer Vorrichtungs-basierten eindeutigen BID; und
Registrierungsmittel (334) zum Registrieren der Vorrichtung (100) an dem drahtlosen Netzwerk des anfordernden mobilen Carriers unter Verwendung der Vorrichtungs-basierten eindeutigen BID bei einer Bestätigung, dass die Vorrichtung von dem drahtlosen Netzwerk des vorherigen mobilen Carriers deaktiviert wurde.

8. System (300) gemäß Anspruch 7 das weiter aufweist Bereitstellungsmittel (334) zum Bereitstellen von angeforderten mobilen Kommunikationsdiensten für die Vorrichtung (100) an dem drahtlosen Netzwerk (200A, 200B) des anfordernden mobilen Carriers bei Registrierung der Vorrichtung an dem drahtlosen Netzwerk des anfordernden mobilen Carriers.

9. System (300) gemäß Anspruch 7 oder Anspruch 8, das weiter aufweist Identifikakionsmittel zum eindeutigen identifizieren der Vorrichtung durch die Vorrichtungs-basierte eindeutige BID, die eine eindeutige elektronische Seelennummer ESN (electronic serial number) oder eine eindeutige Produktidentifikationsnummer PIN (product identification number) aufweist.

10. System (300) gemäß Anspruch 9, wobei das Bereitstellungssystem (334) ausgebildet ist zum Führen einer Liste von vorher registrierten Vorrichtungen (100) in der Datenbank (336) basierend auf der eindeutigen ESN oder der eindeutigen PIN.

11. System (300) gemäß Anspruch 9 oder Anspruch 10, wobei das Bereitstellungssystem (334) konfiguriert ist zum Empfangen der Anforderung zum Registrieren der Vorrichtung (100) nur, wenn die Vorrichtung über das drahtlose Netzwerk (200A, 200B) des anfordernden mobilen Carriers drahtlos verbunden ist und durch die eindeutige ESN oder die eindeutige PIN identifiziert werden kann.

12. System (300) gemäß einem der Anspruche 7 bis 11, wobei die Datenbank (336) ausgebindet ist zum Speichern der neuen Registrierungsinformation für die Vorrichtung (100) bei Registrierung der Vorrichtung an dem drahtlosen Netzwerk des anfordernden mobilen Carriers.

13. Computerlesbares das Computercode speichert, der bei einem Laden in ein Bereitstellungssystem (334) das Bereitstellungssystem anpasst zur Durchführung des Verfahrens gemäß einem der Ansprüche 1 bis 6.

14. Kommunikationsnetzwerk, das zwei mobile Carrier (310, 320), eine handgehaltene Vorrichtung (100) und das System (300) gemäß einem der Ansprüche 7 bis 12 aufweist zum Übergeben der handgehaltenen Vorrichtung zwischen den mobilen Carriern.

## Revendications

1. Procédé de transfert d'un dispositif de poche (100) entre opérateurs de téléphonie mobile (310, 320) détectant le dispositif de poche (100), comprenant le fait :
de recevoir à un système d'approvisionnement de fournisseur (334), à partir d'un opérateur de téléphonie mobile demandeur (310, 320), une demande d'enregistrement du dispositif (100) sur le réseau sans fil de l'opérateur de téléphonie mobile demandeur (200A, 200B) ;
d'identifier le dispositif (100) de façon unique et d'interroger une base de données (336) accessible au système d'approvisionnement de fournisseur (334) pour déterminer si le dispositif (100) a déjà été enregistré à un opérateur de téléphonie mobile précédent en utilisant une identification de facturation unique "BID" spécifique au dispositif ;
de déterminer si le dispositif (100) a déjà été enregistré chez un opérateur de téléphonie mobile précédent avec une BID unique spécifique au dispositif, et si c'est le cas, de désactiver le dispositif (100) du réseau sans fil de l'opérateur de téléphonie mobile précédent : et
en confirmant que le dispositif (100) a été désactivé du réseau sans fil de l'opérateur de téléphonie mobile précédent, d'enregistrer le dispositif sur le réseau sans fil de l'opérateur de téléphonie mobile demandeur (200A, 2008) avec la BID unique spécifique au dispositif.

2. Procédé de la revendication 1, comprenant en outre, lors de l'enregistrement da dispositif (100) sur le réseau sans fil de l'opérateur de téléphonie mobile demandeur (200A, 200B), le fait d'approvisionner des services de communication mobile demandés pour le dispositif (100) sur le réseau sans fil de l'opérateur de téléphonie mobile demandeur (200A, 200B).

3. Procédé de la revendication 1 ou de la revendication 2, comprenant en outre le fait d'utiliser comme BID unique spécifique au dispositif un numéro de série électronique unique "ESN'" ou un numéro de produit d'identification unique "PIN".

4. Procédé de la revendication 3, comprenant en outre le fait de garder dans la base de données (336) une liste des dispositifs déjà enregistrés (100) sur la base de la BID unique spécifique au dispositif.

5. Procédé de la revendication 3 ou de la revendication 4, comprenant en outre le fait de recevoir la demande d'enregistrement du dispositif (100) seulement si le dispositif est connecté sans fil via le réseau sans fil de l'opérateur de téléphonie mobile demandeur (200A, 200B) et s'il peut être par la BID unique spécifique au dispositif.

6. Procédé de l'une quelconque des revendications 1 à 5, comprenant en outre, lors de l'enregistrement du dispositif (100) sur le réseau sans fil de l'opérateur de téléphonie mobile demandeur (200A, 200B), le fait de mettre à jour la base de données (336) avec les nouvelles informations d'enregistrement pour le dispositif.

7. Système (3001 pour transférer un dispositif de poche (100) entre opérateurs de téléphonie mobile (310), 320) détectant le dispositif de poche (100), comprenant ;
un système d'approvisionnement de fournisseur (334) pour recevoir d'un opérateur de téléphonie mobile demandeur (310, 320) une demande d'enregistrement du dispositif sur le réseau sans fil de l'opérateur de téléphonie mobile demandeur (200A, 200B) ;
une base de données (336) accessible au fournisseur (330) pour déterminer si le dispositif (100) a déjà été enregistré chez un opérateur de téléphonie mobile précédent en utilisant une identification de facturation unique "BID" spécifique au dispositif ;
un moyen de désactivation (334) pour désactiver le dispositif (100) du réseau sans fil de l'opérateur de téléphonie mobile précédent si le système d'approvisionnement de fournisseur (334) détermine que le dispositif a déjà été enregistré chez un opérateur de téléphonie mobile précédent en utilisant une BID unique spécifique au dispositif ; et
un moyen d'enregistrement (334) pour enregistrer le dispositif (100) sur le réseau sans fil de l'opérateur de téléphonie mobile demandeur es utilisant la BID unique spécifique au dispositif en confirmant que le dispositif a été désactivé du réseau sans fil de l'opérateur de téléphonie mobile demandeur.

8. Système (300) de la revendication 7, comprenant en outre un moyen d'approvisionnement (334) pour fournir des services de communication mobile demandés pour le dispositif (100) sur le réseau sans fil de l'opérateur de téléphonie mobile demandeur (200A, 200B) lors de l'enregistrement du dispositif sur le réseau sans fil de l'opérateur de téléphonie mobile demandeur.

9. Système (300) de la revendication 7 ou de la revendication 8, comprenant en outre in moyen d'identification identifiant de façon unique le dispositif par la BID unique spécifique au dispositif comprenant un numéro de série électronique unique "ESN" ou un numéro d'identification de produit unique "PIN".

10. Système (300) de la revendication 9, dans lequel le système d'approvisionnement (334) est agencé pour garder dans la base de données (336) une liste des dispositifs déjà enregistrés (100) sur la base de l'ESN unique ou du code PIN unique.

11. Système (300) de la revendication 9 ou de la revendication 10, dans lequel le système d'approvisionnement (334) est configuré pour recevoir la demande d'enregistrement du dispositif (100) uniquement si le dispositif est connecté sans fil via le réseau sans fil de l'opérateur de téléphonie mobile demandeur (200A, 2003) et s'il peut être identifié par l'ESN unique ou le code PIN unique.

12. Système (300) de l'une quelconque des revendications 7 à 11, dans lequel la base de données (336) est agencée pour stocker les nouvelles informations d'enregistrement pour le dispositif (100) lors de l'enregistrement du dispositif sur le réseau sans fil de l'opérateur de téléphonie mobile demandeur.

13. Support lisible par ordinateur stockant un code informatique qui lorsqu'il est chargé dans un système d'approvisionnement (334) adapte le système d'approvisionnement pour réaliser le procédé de l'une quelconque des revendications 1 lia 6.

14. Réseau de communication comprenant deux opérateurs de téléphonie mobile (310, 320), un dispositif de poche (100) et le système (300) de l'une quelconque des revendications 7 à 12 pour le transfert du dispositif de poche entre les opérateurs de téléphonie mobile.
